# EUROPEAN PATENT APPLICATION

(11) **EP 4 843 810 A1**
(43) Date of publication of application: **25.11.2026**
(21) Application number: 24918218.9
(22) Date of filing: 20.11.2024
(51) Int. Cl.: B60K 17/02

(54) **ELECTRIC MOTOR DRIVING SYSTEM AND VEHICLE**

(30) Priority: 17.01.2024 CN 202410070518; 17.01.2024 CN 202420119070 U
(71) Applicant: Guangzhou Automobile Group Co., Ltd., Guangzhou, Guangdong 511434 (CN)
(72) Inventor: RAO, Junwei, Guangzhou, Guangdong 511434 (CN); ZHOU, Wentai, Guangzhou, Guangdong 511434 (CN); ZHANG, Anwei, Guangzhou, Guangdong 511434 (CN); LI, Defeng, Guangzhou, Guangdong 511434 (CN); ZHANG, Xuan, Guangzhou, Guangdong 511434 (CN)
(74) Representative: Metida
(86) International application number: PCT/CN2024/133170
(87) International publication number: WO 2025/152609

(57) **Abstract**

The present application discloses a motor drive system and a vehicle. The motor drive system includes: a first motor, a second motor, a first clutch, a first intermediate shaft, and a second intermediate shaft, wherein one end of the first intermediate shaft is in transmission connection with the first motor, one end of the second intermediate shaft is in transmission connection with the second motor, the other end of the first intermediate shaft and the other end of the second intermediate shaft are connected by the first clutch, and the first clutch is configured to engage or disengage the first intermediate shaft and the second intermediate shaft; a differential including an input end, a first output end, and a second output end, wherein the input end is in transmission connection with the first intermediate shaft; a second clutch connected to the second intermediate shaft and the second output shaft, and configured to engage or disengage the second intermediate shaft and the second output shaft; and a third clutch connected to the first output shaft and the second output shaft, and configured to engage or disengage the first output shaft and the second output shaft. The present application allows for different ratios of torque distribution among the motors, thereby improving motor efficiency.

## Description

### TECHNICAL FIELD

The present application belongs to the technical field of motors, and specifically relates to a motor drive system and a vehicle.

### BACKGROUND

Distributed drive has become a hot topic in electric drive system research at present, which consists of two or more drive motors that independently drive respective wheels, reducing power and torque demands of the individual motors and making it more conducive to integration, lightweighting and modular design of a system.

However, in traditional distributed electric drive configurations, left and right motors drive left and right wheels respectively. In most driving conditions, torque demands of the left and right wheels are the same. Therefore, in most cases, the torque of the left and right motors is distributed at 50% to each other, which will reduce the efficiency of the motors.

### SUMMARY

An objective of the present application is to provide a motor drive system and a vehicle, wherein different ratios of torque distribution can be performed among the motors to improve motor efficiency.

In a first aspect of the present application, disclosed is a motor drive system, which includes:
a first motor, a second motor, and a first clutch;
a first intermediate shaft and a second intermediate shaft, wherein one end of the first intermediate shaft is in transmission connection with the first motor, one end of the second intermediate shaft is in transmission connection with the second motor, the other end of the first intermediate shaft and the other end of the second intermediate shaft are connected by the first clutch, and the first clutch is configured to engage or disengage the first intermediate shaft and the second intermediate shaft;
a differential including an input end, a first output end, and a second output end, wherein the input end is in transmission connection with the first intermediate shaft, the first output end is connected to a first wheel through a first output shaft, and the second output end is connected to a second wheel through a second output shaft;
a second clutch connected to the second intermediate shaft and the second output shaft, and configured to engage or disengage the second intermediate shaft and the second output shaft; and
a third clutch connected to the first output shaft and the second output shaft, and configured to engage or disengage the first output shaft and the second output shaft.

In one exemplary embodiment of the present disclosure, the motor drive system further includes a differential lock connected to the differential, and is configured to engage or disengage the first output end and the second output end.

In one exemplary embodiment of the present disclosure, the first motor has a first motor output shaft, wherein the first motor output shaft is connected to the first intermediate shaft through a first gear transmission device.

In one exemplary embodiment of the present disclosure, the first gear transmission device includes at least a first gear disposed on the first motor output shaft and a second gear disposed on the first intermediate shaft, wherein the first gear meshes with the second gear.

In one exemplary embodiment of the present disclosure, the second motor has a second motor output shaft, wherein the second motor output shaft is connected to the second intermediate shaft through a second gear transmission device.

In one exemplary embodiment of the present disclosure, the second gear transmission device includes at least a third gear disposed on the second motor output shaft and a fourth gear disposed on the second intermediate shaft, wherein the third gear meshes with the fourth gear.

In one exemplary embodiment of the present disclosure, a fifth gear is disposed on the second output shaft, one end of the second clutch is connected to a sixth gear, the other end is connected to the second intermediate shaft, and the fifth gear meshes with the sixth gear.

In one exemplary embodiment of the present disclosure, the input end of the differential is connected to a seventh gear, an eighth gear is disposed on the first intermediate shaft, and the seventh gear meshes with the eighth gear.

In one exemplary embodiment of the present disclosure, the first intermediate shaft and the second intermediate shaft are coaxially disposed, and the first clutch is disposed at the center of an axis of the first intermediate shaft and the second intermediate shaft.

In a second aspect of the present application, further disclosed is a vehicle including the aforementioned motor drive system.

The solution of the present application has the following beneficial effects:

In the present application, by controlling engagement or disengagement of the first clutch, the second clutch, and the third clutch, the torques of the first motor and the second motor can be uniformly transmitted to the first wheel and the second wheel. At this time, the first motor and the second motor can select different torques, and different ratios of torque distribution can be performed between the first motor and the second motor, so that the motors can obtain better driving efficiency and thus obtain better economy.

Other features and advantages of the present application will become apparent from the following detailed description, or may be learned in part from practice of the present application.

It should be understood that the above general description and the following detailed description are exemplary and explanatory only, and do not limit the present application.

### BRIEF DESCRIPTION OF THE DRAWINGS

The accompanying drawings here, which are incorporated in and form part of this specification, illustrate embodiments consistent with the present application and, together with the description, serve to explain the principles of the present application. Obviously, the accompanying drawings described below are only some embodiments of the present application. For those of ordinary skill in the art, other drawings can be obtained from these drawings without any creative effort.

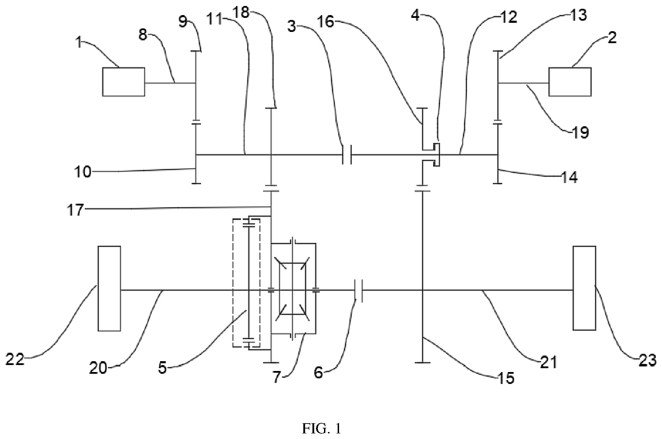

FIG. 1 shows a schematic structural diagram of connection between a motor drive system and wheels provided in Embodiment 1 of the present application.

Description of reference numerals in the drawings:
first motor 1, second motor 2, first clutch 3, second clutch 4, differential lock 5, third clutch 6, differential 7, first motor output shaft 8, first gear 9, second gear 10, first intermediate shaft 11, second intermediate shaft 12, third gear 13, fourth gear 14, fifth gear 15, sixth gear 16, seventh gear 17, eighth gear 18, second motor output shaft 19, first output shaft 20, second output shaft 21, first wheel 22, and second wheel 23.

### DETAILED DESCRIPTION

Exemplary implementations will now be described more fully with reference to the accompanying drawings. However, the exemplary implementations can be implemented in many forms and should not be construed as being limited to the examples set forth herein; on the contrary, providing these implementations makes the present application more comprehensive and complete, and fully conveys the concept of exemplary implementations to those skilled in the art.

In the present application, the terms "first" and "second" are used for descriptive purposes only and should not be construed as indicating or implying relative importance or implicitly specifying the number of technical features indicated. Therefore, features specified as "first" or "second" can explicitly or implicitly include one or more of those features. In the description of the present application, "a plurality of" means two or more, unless otherwise expressly and specifically defined.

In the present application, unless otherwise expressly specified and limited, the terms "assembly" and "connection" should be interpreted broadly, for example, the connection may refer to fixed connection, detachable connection, or an integral part; the connection may be mechanical connection or electrical connection; the connection may be direct connection or indirect connection through an intermediate medium; the connection may be internal communication between two components or interaction between the two components. Those of ordinary skill in the art can understand the specific meaning of the above terms in the present application according to the specific circumstances.

Further, the described features, structures, or characteristics may be combined in one or more embodiments in any suitable manner. In the following description, numerous specific details are provided to give a full understanding of embodiments of the present application. However, those skilled in the art will recognize that the technical solutions of the present application can be practiced without one or more of the specific details, or other methods, components, devices, steps, etc. can be used. In other cases, well-known methods, apparatuses, implementations, or operations are not shown or described in detail to avoid obscuring any aspects of the present application.

Referring to FIG. 1, an embodiment of the present disclosure provides a motor drive system, which includes a first motor 1, a second motor 2, a first intermediate shaft 11, a second intermediate shaft 12, a differential 7, a first clutch 3, a second clutch 4, and a third clutch 6.

In some embodiments, the first motor 1 is in transmission connection with one end of the first intermediate shaft 11, and the first motor 1 transmits power to the first intermediate shaft 11. The second motor 2 is in transmission connection with one end of the second intermediate shaft 12, and the second motor 2 transmits power to the second intermediate shaft 12. The other end of the first intermediate shaft 11 and the other end of the second intermediate shaft 12 are connected by the first clutch 3, and the first clutch 3 is configured to engage or disengage the first intermediate shaft 11 and the second intermediate shaft 12. When the first clutch 3 is engaged, the first intermediate shaft 11 and the second intermediate shaft 12 form a whole, and the power of the first motor 1 and the power of the second motor 2 are combined and transmitted to the first intermediate shaft 11 and the second intermediate shaft 12. When the first clutch 3 is disengaged, the power of the first motor 1 and the power of the second motor 2 are transmitted to the first intermediate shaft 11 and the second intermediate shaft 12 respectively, and the first intermediate shaft 11 and the second intermediate shaft 12 do not affect each other.

In some embodiments, the first motor 1 and the second motor 2 may be connected to a power battery respectively, and the power battery provides electrical energy required for driving the first motor 1 and the second motor 2. At the same time, the electrical energy generated when the first motor 1 and the second motor 2 are driven to rotate may also be stored in the power battery.

It should be appreciated that an inner hub of the first clutch 3 may be connected to one end of the first intermediate shaft 11 or one end of the second intermediate shaft 12, and correspondingly, an outer hub of the first clutch 3 may be connected to one end of the second intermediate shaft 12 or one end of the first intermediate shaft 11.

In some embodiments, the first intermediate shaft 11 and the second intermediate shaft 12 are coaxially disposed. When the first clutch 3 is engaged, the first intermediate shaft 11 and the second intermediate shaft 12 form an intermediate shaft, which facilitates the transmission of power. At the same time, the first motor 1 and the second motor 2 may be disposed on both sides of the first intermediate shaft 11 and the second intermediate shaft 12 respectively to integrate the same into a same housing, making the structure more compact and easier to arrange. The first clutch 3 is disposed at the center of an axis of the first intermediate shaft 11 and the second intermediate shaft 12.

In some embodiments, the first motor 1 has a first motor output shaft 8, and the first motor output shaft 8 is connected to the first intermediate shaft 11 through a first gear transmission device. The connection through the first gear transmission device is easy to implement and has a simple structure, which can also obtain a required transmission ratio and ensure reliable transmission. Specifically, the first gear transmission device includes at least a first gear 9 disposed on the first motor output shaft 8 and a second gear 10 disposed on the first intermediate shaft 11. The first gear 9 meshes with the second gear 10. A transmission ratio of the first gear transmission device can be controlled by controlling the number of teeth of the first gear 9 and the second gear 10. Of course, the first gear transmission device may also include more transmission gears to achieve different transmission ratios.

Similarly, the second motor 2 has a second motor output shaft 19, and the second motor output shaft 19 is connected to the second intermediate shaft 12 through a second gear transmission device. Specifically, the second gear transmission device includes at least a third gear 13 disposed on the second motor output shaft 19 and a fourth gear 14 disposed on the second intermediate shaft 12. The third gear 13 meshes with the fourth gear 14. A transmission ratio of the second gear transmission device can be controlled by controlling the number of teeth of the third gear 13 and the fourth gear 14. Of course, the second gear transmission device may also include more transmission gears to achieve different transmission ratios.

It should be appreciated that the first gear transmission device and the second gear transmission device may adopt the same gear structure configuration to improve the versatility of the gears, and the motor drive system has high symmetry to avoid the center of gravity deviating excessively to one side.

In some embodiments, a fifth gear 15 is disposed on the second output shaft 21, one end of the second clutch 4 is connected to a sixth gear 16, the other end is connected to the second intermediate shaft 12, and the sixth gear 16 and the fifth gear 15 mesh, thereby utilizing the fifth gear 15, the sixth gear 16 and the second clutch 4 to realize connection and separation of the second output shaft 21 and the second intermediate shaft 12. An outer hub of the second clutch 4 may be connected to the second intermediate shaft 12, and an inner hub of the second clutch 4 may be connected to the sixth gear 16.

In some embodiments, the differential 7 includes an input end, a first output end, and a second output end. The input end of the differential 7 is in transmission connection with the first intermediate shaft 11. The first output end is connected to a first wheel 22 through a first output shaft 20. The second output end is connected to a second wheel 23 through a second output shaft 21. The first wheel 22 and the second wheel 23 are disposed in pairs, such as the first wheel 22 and the second wheel 23 being one of front wheels of a vehicle, or one of rear wheels of the vehicle. Power is transmitted through the first intermediate shaft 11 to the differential 7, and finally to the first wheel 22 and the second wheel 23 to drive the vehicle to move.

It should be appreciated that, when the vehicle turns, turning radii of the inner and outer wheels are different, with the outer wheel having a larger turning radius than that of the inner wheel. This requires the outer wheel to rotate at a higher speed than the inner wheel when turning. The differential 7 is a mechanism that enables the inner and outer wheels to rotate at different speeds. The differential 7 is composed of a planetary gear, a planetary gear carrier, a half shaft gear, and other components. Power enters the differential 7 through the input shaft, directly driving the planetary gear carrier, which in turn drives left and right half shafts to drive the inner and outer wheels respectively. The input shaft is the input end of the differential 7, and the first and second output ends may be either the left or right half shaft. When turning, the first wheel 22 and the second wheel 23 are either the inner or outer wheel. The specific structure and working principle of the differential 7 will not be described in detail here.

In some embodiments, the input end of the differential 7 is connected to a seventh gear 17, an eighth gear 18 is disposed on the first intermediate shaft 11, and the seventh gear 17 and the eighth gear 18 mesh to transmit power from the first intermediate shaft 11 to the differential 7. Specifically, the eighth gear 18 and the sixth gear 16 may be symmetrically disposed relative to the first clutch 3, so that the motor drive system has good symmetry, deviation of the center of gravity is avoided, and the reliability of the motor drive system is improved.

In some embodiments, the motor drive system further includes a differential lock 5, and the differential lock 5 is connected to the differential 7 and is configured to engage or disengage the first output end and the second output end. By disposing the differential lock 5, the differential 7 becomes a forced locking differential 7. When the wheel on one side slips, the differential lock 5 may be configured to lock the differential 7 and prevent a differential action. This allows most or even all of the torque to be transferred to the wheel on the other side on a good road surface, so as to make full use of adhesive force of the wheel on the side to generate sufficient driving force, enabling the vehicle to escape and continue driving. According to different structural characteristics, the combination of the differential lock 5 and the differential 7 may be of a forced locking type, a high friction type, and a freewheel type. Specifically, the high friction type includes a friction plate self-locking differential 7, a Torsen differential 7, a worm gear differential 7, a slider cam differential 7, and a viscous coupling differential 7, which are widely used in vehicles. The connection and working principle of the differential lock 5 and the differential 7 will not be described in detail here.

In some embodiments, the second clutch 4 is connected to the second intermediate shaft 12 and the second output shaft 21 and is configured to engage or disengage the second intermediate shaft 12 and the second output shaft 21. When the second clutch 4 is engaged, the power output by the second motor 2 is transmitted to the second output shaft 21 through the second intermediate shaft 12 to drive the second wheel 23. When the second clutch 4 is disengaged, the second intermediate shaft 12 and the second output shaft 21 are disengaged.

In some embodiments, the third clutch 6 is connected to the first output shaft 20 and the second output shaft 21 and is configured to engage or disengage the first output shaft 20 and the second output shaft 21. When the third clutch 6 is engaged, the first output shaft 20 and the second output shaft 21 are connected, and speeds of the first wheel 22 and the second wheel 23 can be controlled through the differential 7. When the third clutch 6 is disengaged, the first output shaft 20 and the second output shaft 21 are disengaged, and the second wheel 23 can be directly controlled to rotate by the second motor 2 through the second intermediate shaft 12 and the second output shaft 21.

In this embodiment, by controlling engagement of the first clutch 3, disengagement of the second clutch 4, and engagement of the third clutch 6, torques of the first motor 1 and the second motor 2 can be uniformly transmitted to the first wheel 22 and the second wheel 23. The first motor 1 and the second motor 2 can jointly drive the first wheel 22 and the second wheel 23. At this time, the first motor 1 and the second motor 2 can select different torques, and different ratios of torque distribution can be performed between the first motor 1 and the second motor 2, so that the motors can obtain better driving efficiency and thus obtain better economy.

Therefore, the motor drive system in this embodiment has a pure electric distributed drive mode, a single-motor drive mode, a pure electric escape mode, and a dual-motor torque distribution drive mode.

In the pure electric distributed drive mode, the first clutch 3 is disengaged, the second clutch 4 is engaged, and the third clutch 6 is disengaged, thereby enabling the first intermediate shaft 11 and the second intermediate shaft 12 to be disengaged, and the first output shaft 20 and the second output shaft 21 to be disengaged. When the first motor 1 and the second motor 2 are in operation, the motors drive the first intermediate shaft 11 and the second intermediate shaft 12 respectively, thereby driving the first wheel 22 and the second wheel 23 to move through the first output shaft 20 and the second output shaft 21 respectively. In this mode, since the first wheel 22 and the second wheel 23 are driven independently by the first motor 1 and the second motor 2 respectively, the power and torque demands for a single motor are reduced, which can greatly improve handling of the vehicle. The differential lock 5 may be engaged with or disengaged from the differential 7. In this embodiment, the differential lock 5 is engaged with the differential 7, resulting in better power transmission effects.

In the single-motor drive mode, if the second motor 2 fails to operate due to a failure, the first clutch 3 may be disengaged, the second clutch 4 may be disengaged, the third clutch 6 may be engaged, and the differential lock 5 may be disengaged, thereby enabling the first intermediate shaft 11 and the second intermediate shaft 12 to be disengaged, the second intermediate shaft 12 and the second output shaft 21 to be disengaged, and the differential 7 to operate. When the first motor 1 is in operation, the motor utilizes the first intermediate shaft 11 to transmit power to the differential 7, thereby driving the first output shaft 20 and the second output shaft 21 respectively, so as to drive the first wheel 22 and the second wheel 23 to operate, thus realizing the operation of the vehicle by single-motor drive. Of course, by the same logic, the second motor 2 may also drive the first wheel 22 and the second wheel 23. In this case, the first motor 1 cannot be used due to a failure. At this time, the first clutch 3 is engaged, the second clutch 4 is disengaged, the third clutch 6 is engaged, and the differential lock 5 is disengaged.

In the pure electric escape mode, the first clutch 3 is engaged, the second clutch 4 is disengaged, the third clutch 6 is engaged, and the differential lock 5 is engaged, thereby enabling the first intermediate shaft 11 and the second intermediate shaft 12 to be engaged, the first output shaft 20 and the second output shaft 21 to be engaged, and the second intermediate shaft 12 and the second output shaft 21 to be disengaged. The torques of the first motor 1 and the second motor 2 are uniformly transmitted to the seventh gear 17, and the differential lock 5 locks the differential 7. When the first wheel 22 slips, the second wheel 23 is driven together; and when the second wheel 23 slips, the first wheel 22 is driven together, thereby enabling the vehicle to escape and continue driving normally.

In the dual-motor torque distribution drive mode, the first clutch 3 is engaged, the second clutch 4 is disengaged, the third clutch 6 is engaged, and the differential lock 5 is disengaged, thereby enabling the first intermediate shaft 11 and the second intermediate shaft 12 to be connected, the first output shaft 20 and the second output shaft 21 to be connected, and the second intermediate shaft 12 and the second output shaft 21 to be disengaged. The torques of the first motor 1 and the second motor 2 are uniformly transmitted to the seventh gear 17, and then transmitted to the first wheel 22 and the second wheel 23 through the differential 7. At this time, the first motor 1 and the second motor 2 can select different torques, and different ratios of torque distribution can be performed between the first motor 1 and the second motor 2, so that the motors can obtain better driving efficiency, thereby achieving better economy and improving the vehicle range.

For example, when the total torque of the motor is required to be T and the speed is n, in the pure electric distributed drive mode, the torque of the first motor 1 and the second motor 2 is T/2 each. Assuming the efficiency is η₁, the required power p₁ = T*n/η₁/9549, where 9549 is a constant coefficient.

In the dual-motor torque distribution drive mode, the torque of the first motor 1 and the second motor 2 in this embodiment may be distributed according to the actual working conditions. Assuming that the distribution ratio of the first wheel 22 is k, the corresponding torque is k*T, and the corresponding efficiency is η₂, then the second wheel 23 is distributed as (1-k)*T, the corresponding efficiency is η₃, and the required power p₂=k*T*n/(9549*η₂) (1-k)*T*n/(9549*η₃), where K may be 20%, 30% or 40%, etc., to be distributed in the most economical way.

The various working modes mentioned above are illustrated by a table, as shown in Table 1 below:

**Table 1**

| Working mode | First motor | Second motor | First clutch | Second clutch | Third clutch | Differential lock |
|---|---|---|---|---|---|---|
| Pure electric distributed drive mode | Working | Working | Disengaged | Engaged | Disengaged | Engaged |
| Single-motor drive mode | Working | Not working | Disengaged | Disengaged | Engaged | Disengaged |
| Pure electric escape mode | Working | Working | Engaged | Disengaged | Engaged | Engaged |
| Dual-motor torque distribution drive mode | Working | Working | Engaged | Disengaged | Engaged | Disengaged |

In summary, the motor drive system of the present application has a simple, compact, and easy-to-arrange overall structure. It can achieve multiple working modes according to the different states of the first clutch 3, the second clutch 4, the third clutch 6, and the differential lock 5. The working mode can be switched according to actual needs, such as switching to the pure electric distributed drive mode to obtain better handling, or switching to the dual-motor torque distribution drive mode to obtain better economy. The system can also switch to the escape mode to escape and continue driving when the vehicle gets stuck, and use the other motor to continue driving the drive system when one of the motors fails.

This embodiment further provides a vehicle including the above-described motor drive system. It should be understood that other components of the vehicle according to this embodiment, such as a driving system, a steering system, a braking system, etc., are already known in the prior art and to those of ordinary skill in the art, therefore detailed descriptions of the known structures are omitted here.

In the description of this specification, references to terms such as "some embodiments", "exemplary", etc., refer to specific features, structures, materials, or characteristics described in connection with that embodiment or example that are included in at least one embodiment or example of the present application. In this specification, the illustrative expressions of the terms used above do not necessarily refer to the same embodiments or examples. Further, the specific features, structures, materials, or characteristics described may be combined in a suitable manner in any one or more embodiments or examples. Further, those skilled in the art can combine and integrate the different embodiments or examples described herein, as well as the features of the different embodiments or examples, without mutual contradiction.

Although embodiments of the present application have been shown and described above, it should be appreciated that the above embodiments are exemplary and should not be construed as limiting the present application. Those of ordinary skill in the art can make changes, modifications, substitutions and variations to the above embodiments within the scope of the present application. Therefore, any changes or modifications made in accordance with the claims and specification of the present application should fall within the scope of the present application.

## Claims

1. A motor drive system, **characterized by** comprising:
a first motor, a second motor, and a first clutch;
a first intermediate shaft and a second intermediate shaft, wherein one end of the first intermediate shaft is in transmission connection with the first motor, one end of the second intermediate shaft is in transmission connection with the second motor, the other end of the first intermediate shaft and the other end of the second intermediate shaft are connected by the first clutch, and the first clutch is configured to engage or disengage the first intermediate shaft and the second intermediate shaft;
a differential comprising an input end, a first output end, and a second output end, wherein the input end is in transmission connection with the first intermediate shaft, the first output end is connected to a first wheel through a first output shaft, and the second output end is connected to a second wheel through a second output shaft;
a second clutch connected to the second intermediate shaft and the second output shaft, and configured to engage or disengage the second intermediate shaft and the second output shaft; and
a third clutch connected to the first output shaft and the second output shaft, and configured to engage or disengage the first output shaft and the second output shaft.

2. The motor drive system according to claim 1, wherein
the motor drive system further comprises a differential lock, and the differential lock is connected to the differential, and is configured to engage or disengage the first output end and the second output end.

3. The motor drive system according to claim 1, wherein
the first motor has a first motor output shaft, and the first motor output shaft is connected to the first intermediate shaft through a first gear transmission device.

4. The motor drive system according to claim 3, wherein
the first gear transmission device comprises at least a first gear disposed on the first motor output shaft and a second gear disposed on the first intermediate shaft, and the first gear meshes with the second gear.

5. The motor drive system according to claim 1, wherein
the second motor has a second motor output shaft, and the second motor output shaft is connected to the second intermediate shaft through a second gear transmission device.

6. The motor drive system according to claim 5, wherein
the second gear transmission device comprises at least a third gear disposed on the second motor output shaft and a fourth gear disposed on the second intermediate shaft, and the third gear meshes with the fourth gear.

7. The motor drive system according to claim 1, wherein
a fifth gear is disposed on the second output shaft, one end of the second clutch is connected to a sixth gear, the other end is connected to the second intermediate shaft, and the fifth gear meshes with the sixth gear.

8. The motor drive system according to claim 1,wherein
the input end of the differential is connected to a seventh gear, an eighth gear is disposed on the first intermediate shaft, and the seventh gear meshes with the eighth gear.

9. The motor drive system according to claim 1, wherein
the first intermediate shaft and the second intermediate shaft are coaxially disposed, and the first clutch is disposed at the center of an axis of the first intermediate shaft and the second intermediate shaft.

10. A vehicle, **characterized by** comprising the motor drive system according to any one of claims 1 to 9.
